Europäisches Patentamt

European Patent Office

Office européen des brevets

(11) Veröffentlichungsnummer: **0 486 779 A2**

## EUROPÄISCHE PATENTANMELDUNG

(21) Anmeldenummer: **91115056.3**

(22) Anmeldetag: **06.09.91**

(51) Int. Cl.⁵: **F16G 11/10**

(30) Priorität: **17.11.90 DE 9015771 U**
**26.03.91 DE 9103708 U**

(43) Veröffentlichungstag der Anmeldung:
**27.05.92 Patentblatt 92/22**

(84) Benannte Vertragsstaaten:
**AT BE DE DK ES FR GB IT NL**

(71) Anmelder: **William Prym-Werke GmbH & Co.**
**KG**
**Zweifaller Strasse 130**
**W-5190 Stolberg/Rhld.(DE)**

(72) Erfinder: **Nysten, Bernhard, Dipl.-Ing.**
**Siegelallee 9**
**W-5100 Aachen(DE)**
Erfinder: **Hurtz, Winfried, Ing.**
**Johannesstrasse 44**
**W-5190 Stolberg(DE)**

(74) Vertreter: **Mentzel, Norbert, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2(DE)**

(54) **Kordelstopper mit wenigstens einer durchziehbaren Kordel und mit einer Kordel-Arretierung.**

(57) Der Kordelstopper besteht aus einem plattenförmigen Gehäuse mit wenigstens einem durchgehenden Kanal, der zum Durchziehen einer Kordel (30) dient. Im Kordelstopper ist eine Arretierung zum Festsetzen der Kordel (20) an einer wählbaren Kordelstelle (38) vorgesehen. Dazu dient ein im Gehäuse (10) längsgeführter Schieber (20), der quer zum Kanal bewegbar ist. Um einen preiswerten Kordelstopper zu entwickeln, der bequem bedienbar ist und sich durch eine raumsparende Lage der Kordel (30) auszeichnet, wird vorgeschlagen, den Kanal parallel zur Plattenebene des Gehäuses (10) verlaufen zu lassen und die Austrittsöffnungen (16) des Kanals an den Schmalseiten (17) des Gehäuses (10) anzuordnen. Die Plattenbreitflächen (18) des Gehäuses liegen längsseits der Kordel (30) und sind frei, wovon wenigstens eine als Träger von Bild- und/oder Zierelementen dienlich ist.

FIG. 1

Die Erfindung richtet sich auf einen Kordelstopper der im Oberbegriff des Anspruches 1 angegebenen Art. Diese Kordelstopper werden an Endstücken einer Kordel benutzt, die beispielsweise im Bund von Kleidungsstücken angeordnet ist. Aufgrund seiner Arretierung kann ein solcher Kordelstopper als Anschlag zur Begrenzung einer wählbaren Kordellänge dienen oder als Verbinder für zwei im Kordelstopper verlaufende Kordelendstücke fungieren.

Bei dem bekannten Kordelstopper dieser Art verläuft der Kanal rechtwinklig zur Plattenebene des Gehäuses. Der Kanal tritt diametral an den beiden Plattenbreitflächen aus. Damit erstreckt sich das plattenförmige Gehäuse in einer Radialebene um die durchgeführte Kordel herum. Dadurch ist die Betätigung der Arretierung erschwert und es ergibt sich eine platzaufwendige Gehäuselage im ganzen Umfangsbereich der Kordel.

Der Erfindung liegt die Aufgabe zugrunde, einen preiswerten, funktionssicheren Kordelstopper der im Oberbegriff des Anspruches 1 angegebenen Art zu entwickeln, der bequem bedienbar ist und sich durch eine raumsparende Lage an der Kordel auszeichnet. Dies wird erfindungsgemäß durch die im Kennzeichen des Anspruches 1 angeführten Maßnahmen erreicht, denen folgende besondere Bedeutung zukommt.

Die Erfindung hat erkannt, daß sich wesentlich günstigere räumliche Verhältnisse ergeben, wenn man das Gehäuse mit seiner Plattenebene in Verlaufsrichtung der Kordel anordnet. Die Handhabe am Schieber zum Wirksam- bzw. Unwirksamsetzen der Arretierung erstreckt sich dann in Kordellängsrichtung, was für die Handhabung günstiger ist. Bedeutsam ist aber vor allem, daß die Austrittsöffnungen des Kanals nunmehr an den Plattenschmalseiten des Gehäuses angeordnet sind und damit wenigstens eine der beiden Plattenbreitflächen ganz frei liegt. Diese Plattenbreitflächen erstrecken sich im wesentlichen zur Kordel und können zugleich die neue Funktion erfüllen, Träger von Firmenlogos, wie Bildern, Schriften oder Zierelementen zu sein. Geht man von einem Kreisumriß gemäß Anspruch 2 aus, so verläuft jetzt der Kanal diametral.

Von besonderem Vorteil ist es, die Plattenbreitflächen, gemäß Anspruch 3, formgleich mit Kappen von Befestigungsteilen auszubilden, wie sie bei Hartkurzwaren-Artikeln, z. B. Nieten, Druckknöpfen, Bördelringen od. dgl. verwendet werden. Damit ergibt sich der große wirtschaftliche Vorteil, die von den Kappen dieser Befestigungsteile verfügbaren Firmenlogos gleichzeitig bei der Herstellung der erfindungsgemäßen Kordelstopper zu verwenden. Man kann daher von einem Kordelstopper einheitlicher Type ausgehen und in Abhängigkeit von dem Abnehmer die Gehäusebreitflächen mit den jeweils individuellen Kappen-Firmenlogos versehen. Dadurch ist eine besonders preiswerte Herstellung der erfindungsgemäßen Kordelstopper möglich.

Weitere Vorteile und Maßnahmen der Erfindung ergeben sich aus den Unteransprüchen, der Beschreibung und den Zeichnungen. Die Erfindung richtet sich dabei auf alle daraus entnehmbaren neuen Merkmale und Merkmalskombinationen, auch wenn diese nicht ausdrücklich in den Ansprüchen angeführt sein sollten. In den Zeichnungen ist die Erfindung in einem Ausführungsbeispiel dargestellt. Es zeigen:

Fig. 1
schematisch in Perspektive ein Teilstück einer Kordel mit daran befindlichem erfindungsgemäßen Kordelstopper,

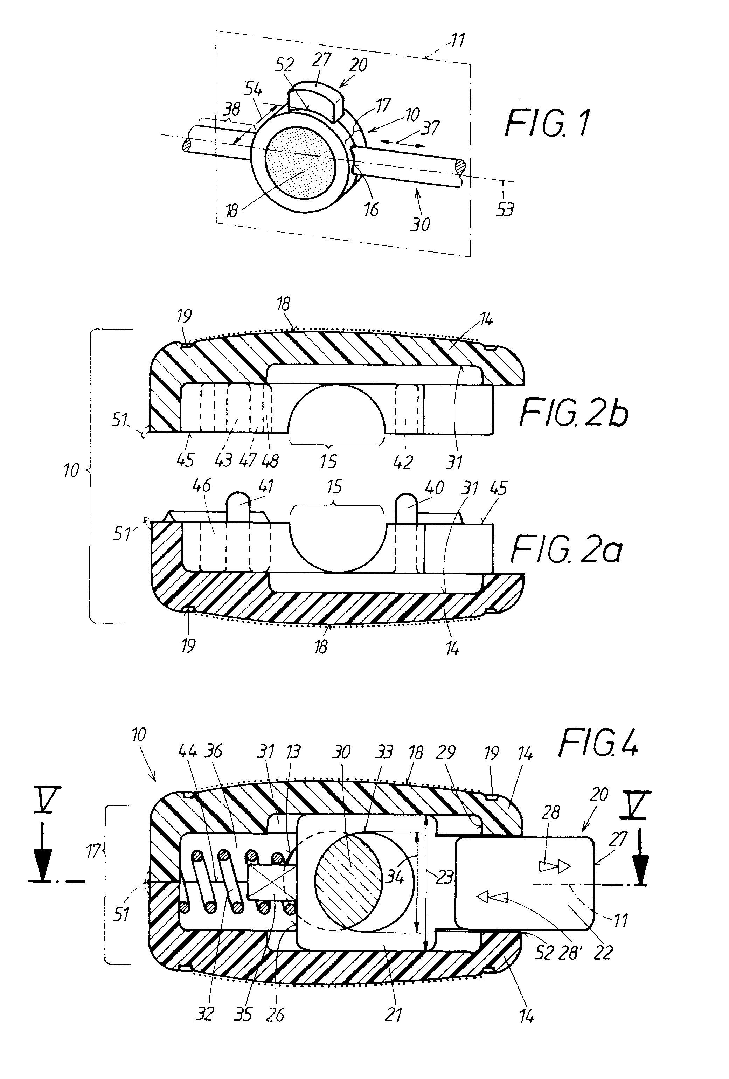

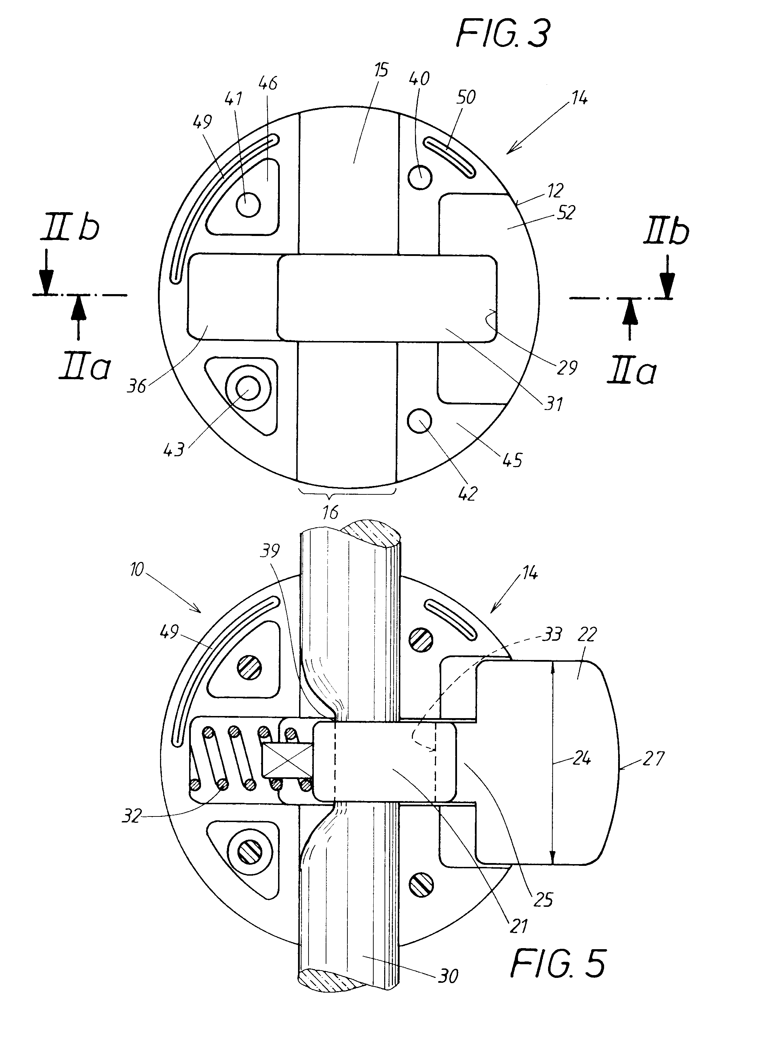

Fig. 2 a und 2 b
Querschnitte durch zwei zum Aufbau des erfindungsgemäßen Kordelstoppers dienenden Gehäusehälften vor ihrer Vereinigung, wobei die Schnittführung durch die Längsschnittlinien II a bzw. II b in Fig. 3 veranschaulicht ist,

Fig. 3
die Draufsicht auf die in Fig. 2 a bzw. 2 b gezeigte Gehäusehälfte

Fig. 4
in einer zu Fig. 2 a, 2 b entsprechenden Querschnittansicht die zum erfindungsgemäßen Kordelstopper vereinigten Bestandteile,

Fig. 5
in einer der Fig. 3 entsprechenden Darstellung eine Längsschnittansicht durch den Kordelstopper längs der in Fig. 4 angedeuteten, versprungenen Schnittlinie V,

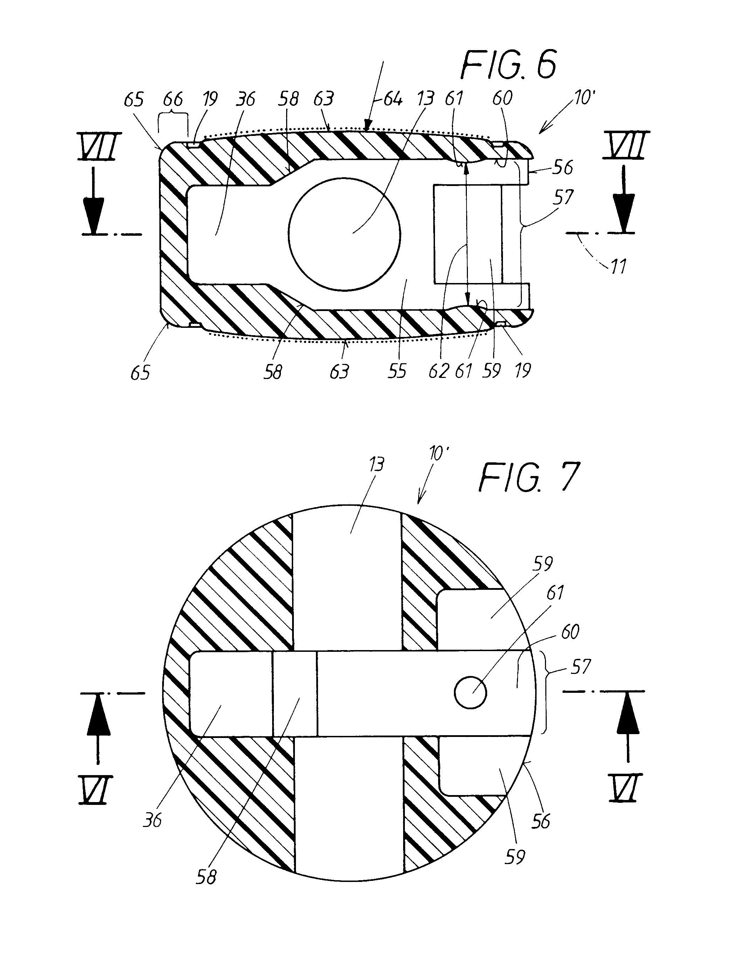

Fig. 6 und 7
zwei zueinander senkrechte Schnittansichten längs der dortigen Schnittlinien VI-VI bzw. VII-VII durch eine alternative Ausführung eines einstükkigen Gehäuses des Kordelstoppers vor dem Zusammenbau seiner Bestandteile, wobei die Schnittführung in Fig. 6 derjenigen von Fig. 4 entspricht,

Fig. 8 und 9
in Seitenansicht und Draufsicht einen zum Gehäuse von Fig. 6 und 7 gehörenden Schieber, als Einzelteil, vor seinem Einbau im Gehäuse.

Der Kordelstopper umfaßt ein Gehäuse 10 in Plattenform. Die mittlere Plattenebene 11 ist in Fig. 1 und 4 strichpunktiert angedeutet, in welcher bei der Erfindung zugleich die Kordel 30 mit ihrer Kordel-Achse 53 gemäß Fig. 1 verläuft. Das Gehäuse hat im vorliegenden Fall einen am besten aus Fig. 3 ersichtlichen Kreisumriß 12 und besitzt einen gestreckten, ihn radial durchsetzenden Kanal 13, der zur Durchführung der Kordel 30 dient. Das Gehäuse besteht aus zwei zueinander formgleichen Gehäusehälften 14 aus Kunststoff mit dem aus Fig. 2 a, 2 b und Fig. 3 ersichtlichen Profil.

Der Kanal 13 ist in den beiden Gehäusehälften 14 in zwei zueinander formgleiche Längsschalen 15 geteilt. Die Austrittsöffnungen 16 des Kanals erscheinen, wie Fig. 1 verdeutlicht, an den Plattenschmalseiten 17. Die annähernd parallel zu der Plattenebene 11 verlaufenden Plattenbreitflächen 18 liegen frei und sind im vorliegenden Fall, wie aus Fig. 2 a und 2 b hervorgeht, leicht gewölbt und durch eine umlaufende Ziernut 19 gegenüber den Randbereichen des Gehäuses 10 abgegrenzt. Diese Plattenbreitflächen 18 haben das Profil von Kappen, wie sie für Befestigungsteile von Hartkurzwarenartikeln an sich bekannt sind. So verwendet man an den Flanschen von Nietbefestigungsteilen Kappen, die mit Bildern, Schriften oder Verzierungen versehen sind. Gerne werden solche Kappen auch zur Anbringung von Firmenlogos verwendet. Diese stehen zur Verfügung und können im Rahmen der Erfindung sogleich bei der Spritzgußherstellung der Gehäusehälften 14 an diesen Stellen genutzt werden. Eine solche Kappenwölbung der Plattenbreitflächen 18 sowie deren Relief macht das Gehäuse auch griffiger. Weil die eine Diagonale in Richtung des Kordelverlaufs 30 liegt, nimmt das Gehäuse 10 die raumsparendste Lage ein. Zwar ragt der dazu senkrecht stehende Durchmesser quer zur Kordel 30 ab, doch geschieht dies nur im mittleren Gehäusebereich 52, von wo aus sich die Dimensionen, zu den Kanal-Austrittsöffnungen 16 hin rasch wieder der Kordel 30 radial nähern. Dieser exponierte mittlere Bereich 52 des Gehäuses wird durch die Erfindung gerade genutzt, um dort den Schieber 20 zu plazieren und damit für die Bedienungsperson leicht auffindbar und bequem bedienbar zu machen. Dort, bei 52, besitzt das Gehäuse 10 gegenüber der in Fig. 1 erkennbaren Kordel-Achse 53 den größten Radialabstand 54.

Der Schieber 20 hat die am besten aus Fig. 4 und 5 ersichtliche Gestalt, die sich gliedern läßt in einen im wesentlichen im Gehäuseinneren angeordneten Arbeitsabschnitt 21 und in eine wenigstens mit ihrem Endstück aus dem Gehäuse 10 herausragende Handhabe 22. Beide Bestandteile 21, 22 des Schiebers 20 haben die Form eines abgeflachten Quaders, der ihnen, im Querschnitt gesehen, ein Rechteckprofil verleiht, dessen Längserstreckung 23 bzw. 24 in den Fig. 4 bzw. 5 veranschaulicht ist. Ein Vergleich dieser beiden Bestandteile 21, 22 zeigt, daß ihre Längserstreckungen 23, 24 rechtwinklig zueinander orientiert sind; während die Längserstreckung 23 im Arbeitsabschnitt 21 im Einbaufall des Schiebers 20 im Gehäuse 10 sich quer zur Plattenebene 11 erstreckt, verläuft die Längserstreckung 24 in der Handhabe 22 parallel zur Plattenebene 11. Zwischen diesen beiden Quaderteilen 21, 22 liegt ein kurzes Verbindungsstück 25, dessen Dimensionen von den Schmalseiten der beidseitigen Quaderdimensionen bestimmt werden.

Im Inneren des Gehäuses 10 befindet sich eine Führungsbahn 31, die den Dimensionen des quaderförmigen Arbeitsabschnitts 21 angepaßt ist und je zur Hälfte in den beiden Gehäusehälften 14 integriert ist. Darin wird der Schieber 20 verdrehungssicher geführt. Am Schieber-Innenende 26 greift eine Druckfeder 32 ein, die bestrebt ist, das Außenende 27 des Schiebers 20 im Sinne des Pfeils 28 aus dem Gehäuse 10 an der radial am weitesten von der Kordel-Achse 53 entfernten Stelle 52 herauszudrücken. Diese Ausschubbewegung 28 ist durch eine innere Anchlagschulter 29 begrenzt, an welcher die obere Quaderkante des Arbeitsabschnitts 21 im Extremfall zur Anlage kommen kann. Dazu kommt es aber im Gebrauchsfall des erfindungsgemäßen Kordelstoppers aber aus folgendem Grund nicht. Der Arbeitsabschnitt 21 besitzt ein Durchtrittsloch 33, dessen lichte Weite 34 dem Öffnungsquerschnitt des Kanals 13 angepaßt ist. Dadurch kommt das Durchtrittsloch 33 mit dem Kanal 13 fluchtend zu liegen, wenn man die Handhabe 22 durch Druckausübung auf ihrem Außenende 27 im Sinne des ebenfalls in Fig. 4 angedeuteten Einschubpfeils 28' eindrückt. Zur besseren Handhabung ist das Schieber-Außenende 27 der Handhabe 22 statt eben bogenförmig gewölbt. Dabei wird die Druckfeder 32 zusammengedrückt, die durch einen angeformten Zapfen 35 am Schieber-Innenende 26 positioniert ist. Die Druckfeder 32 befindet sich dabei in einer ebenfalls je hälftig in den beiden Gehäusehälften 14 angeordneten Kammer 36 des Gehäuses 10, die sich am Innenende der bereits erwähnten Führungsbahn 31 anschließt.

In dieser Einschublage 28' läßt sich die Kordel 30 durch den Kanal 13 und das fluchtend damit angeordnete Durchtrittsloch 33 bequem hindurchfädeln. In diesem Zustand ist auch das Gehäuse 10 im Sinne des in Fig. 1 angedeuteten Doppelpfeils 37 längsverschiebbar. An einer durch das Endstück 38 in Fig. 1 verdeutlichten Stelle läßt sich nun der Kordelstopper einfach dadurch unverschiebbar an der Kordel 30 festlegen, daß man die Handhabe 22 des Schiebers 20 frei gibt. Dann drückt die Feder 32 im Sinne des Ausschubpfeils 28 den Schieber 20 quer zur Kordel und bringt ihr Durchtrittsloch 33 in einen Versatz zum Kanal 13, bei dem es zu einer am besten aus Fig. 5 ersichtlichen Kordelquetschung 39 kommt. Damit ist das Gehäuse 10 an der Kordel 30 arretiert.

Die beiden Gehäusehälften 14 sind zueinander spiegelbildlich gleich gestaltet und besitzen komplementäre Verbindungselemente 40 bis 43 in Form von Zapfen 40, 41 einerseits und Aufnahmen 42, 43 andererseits. Diese sind, wie am besten Fig. 3 zeigt, klappsymmetrisch bezüglich der von der Führungsbahn 31 bestimmten Längsmitte angeordnet. Diese Verbindungselemente 40 bis 43 befinden sich zunächst in den vier Sektoren, die aus dem Kreisgebilde der Gehäusehälfte 14 durch die rechtwinklig zueinander liegenden Kanallängsschalen 15 einerseits und die Hälften der Führungsbahn 31 und der Kammer 36 andererseits abgesetzt werden. Die Verbindungselemente 40 bis 43 sind in den von der Trennfuge 44 bestimmenden Berührungsflächen 45 angeordnet. Wie aus den Fig. 2 a und 2 b deutlich wird, geht der Zapfen 40 von dieser trennfugenseitigen Berührungsfläche 45 aus, während der auf der anderen Seite der Kanalschale 15 befindliche andere Zapfen 41 mit einer Teillänge in einer Gehäuse-Aussparung 46 abgesenkt ist. Zwar sind beide, den Zapfen 40, 41 gegengeordnete Aufnahmen 42, 43 gleich ausgebildet, doch wird die dem längeren Zapfen 41 zugeordnete Aufnahme 43 vom Inneren einer Hülse 47 erzeugt, die in einer Gehäuse-Ausnehmung 48 angeordnet ist. Hierdurch ist die Elastizität des Materials beim Einkuppeln des langen Zapfens 41 in der Aufnahme-Hülse 47 verbessert.

Zur Verbesserung der Verbindung ist die Berührungsfläche 45 der Gehäusehälfte 14 im Randbereich ihres Kreisumrisses 12 mit Rippen 49, 50 ausgerüstet, die beim Zusammenfügen der beiden Gehäusehälften 14 als Schweißhilfsmittel fungieren. Es handelt sich dabei um Energierichtungsgeber, welche die Schallrichtung beim Schweißen mit Ultraschall konzentrieren. Dabei verflüchtet sich die Rippe und die ihr diametral gegenüberliegende Widerlagerfläche der Gegen-Gehäusehälfte. Das erweichte Material dient als Klebemittel, das nach dem Erkalten aushärtet und für den Zusammenhalt der beiden Gehäusehälften 14 sorgt.

Es ist bedarfsweise möglich, die beiden Gehäusehälften 14 im gleichen Werkzeug herzustellen, wobei diese dann paarweise durch eine in Fig. 2 a, 2 b und Fig. 4 angedeutete Werkstoffbrücke 51 unverlierbar aneinander hängen. Eine solche Werkstoffbrücke 51 könnte zwar als Gelenkscharnier ausgebildet sein, doch ist es einfacher und preiswerter, hierfür ein Filmscharnier zu verwenden. Der Zusammenbau der beiden Gehäusehälften 14 geschieht dann einfach durch eine Zusammenklapp-Bewegung.

Die Fig. 6 bis 9 zeigen die beiden Bestandteile 10', 20' einer abgewandelten Ausführung des Kordelstoppers nach der Erfindung. Zur Benennung entsprechender Bauteile sind die gleichen Bezugszeichen wie im vorausgehenden Ausführungsbeispiel verwendet, weshalb insoweit die bisherige Beschreibung gilt. Es genügt, lediglich auf die Unterschiede einzugehen. Umgekehrt gelten die nachfolgenden Beschreibungsteile, soweit sie im vorausgehenden Ausführungsbeispiel von Fig. 1 bis 5 eine Entsprechung finden, auch für das vorbeschriebene erste Ausführungsbeispiel.

In Fig. 6 und 7 ist ein aus Kunststoff im Spritzgußverfahren einstückig erzeugtes plattenförmiges Gehäuse 10' gezeigt, welches nachfolgend kurz "Plattengehäuse" bezeichnet werden soll. Es umfaßt in seinem Inneren zwei einander kreuzende Kammern, nämlich den zur Aufnahme der bereits vorbeschriebenen Kordel 30 dienenden längs durchlaufenden Kanal 13 und eine quer dazu verlaufende Höhle 55, die an der einen Schmalseite 56 des Plattengehäuses 10' ausmündet. Die Höhle 55 ist in sich abgestuft und besitzt zunächst eine an der Schmalseite 56 ausmündende Rinne 57, die sich im Höhlengrund über eine Schrägfläche 58 in die bereits vorausgehend beschriebene Kammer 36 verengt. Die Platten-Schmalseiten 56 sind, von Kantenrundungen 65 am Kreisumriß abgesehen, im wesentlichen eben gestaltet. Diese Rinne 57 weitet sich im Bereich der Höhlenöffnung in zueinander spiegelbildlicher Weise bezüglich einer senkrecht zum Kanal 13 verlaufenden Querschnittsebene in zwei einander gegenüberliegende Ausweitungen 59, die einen Rechteckquerschnitt bestimmen und im Bereich der Höhlenöffnung liegen. Auch die Rinne 57 besitzt einen Rechteckquerschnitt, der aber senkrecht zu dem von den beiden Ausweitungen 59 bestimmten Querschnitt liegt. Die Höhlenwände 60 im Bereich der Rinne 57 sind mit zwei einander gegenüberliegenden Nocken 61 ausgerüstet, die hier kalottenförmig ausgebildet sind und einen mit dem noch näher zu beschreibenden Schieber 20' abgestimmten Abstand 62 zueinander aufweisen.

Das Plattengehäuse 10' hat auch hier einen Kreisumriß, der seine Schmalseiten bestimmt. Die Plattenbreitflächen sind hier als Kugelflächen 63 mit einer vorzugsweise mit einem zueinander gleichen Kugelradius ausgebildet, die allerdings eine sehr flache Wölbung aufweist. Der Kugelradius übersteigt die gegebenen Dimensionen des Plattengehäuses 10' um ein Vielfaches, nämlich etwas mehr als das Dreifache des erwähnten Kreisdurchmessers vom Plattengehäuse 10'.

Diese Kugelflächen 63 haben eine Wölbung, welche der konkaven Krümmung an der Innenfläche von Kappen entspricht, wie sie bei Befestigungsteilen von Hartkurzwaren-Artikeln verwendet werden. Diese können daher in austauschbarer Weise an den Kugelflächen 63 befestigt werden. Beide Kugelflächen 63 sind von im wesentlichen ebenen Rahmenteilen 66 eingefaßt, welche in Form einer Randzone die Plattenbreitflächen mitbestimmen. Zwischen den Rahmenteilen 66 und den Kugelflächen 63 befindet sich eine bereits erwähnte Nut 19, welche vorzugsweise mit dem Umriß der zu montierenden Kappen ausgerichtet ist.

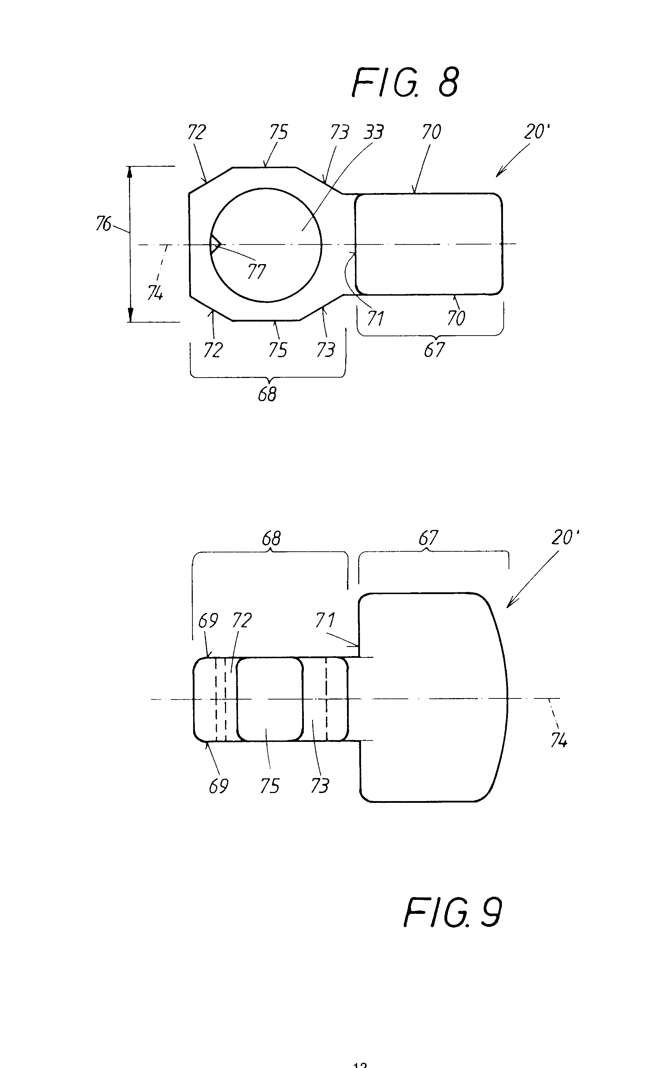

In Fig. 8 und 9 ist der zum vorbeschriebenen Plattengehäuse 10' gehörende Schieber 20' veranschaulicht. Er besteht seinerseits aus zwei einstükkigen Plattenabschnitten 67, 68, die aber, im Gegensatz zu der beschriebenen kugelflächenartigen Bombierung der Plattenbreitflächen im Plattengehäuse 10' ebene Plattenflächen 69 bzw. 70 aufweisen. Die beiden Plattenabschnitte 67, 68 berühren sich bei ihrer Einstückigkeit nur mit einer Stelle ihrer Schmalseiten 71 und stehen mit ihrem Plattenverlauf rechtwinklig zueinander. Der eine Plattenabschnitt 68 besitzt das bereits beschriebene Durchtrittsloch 33 für die Kordel und fungiert somit als der bereits beim ersten Ausführungsbeispiel beschriebene Arbeitsabschnitt dieses Schiebers 20' nach seiner Montage im Plattengehäuse 10'. Im Inneren des Durchtrittslochs 33 befindet sich ein Zahn 77, der im Gebrauchsfall in die Kordel eindringt. Der Umriß dieses Plattenabschnitts 68 ist aber ungleichförmig gestaltet und umfaßt zu zwei einander in der Mitte des Durchtrittslochs 33 schneidenden Spielebenen spiegelsymmetrisch liegende innere und äußere Auflaufschrägen 72, 73 die, ausweislich der Fig. 8, diesem Plattenabschnitt 68 das Aussehen einer Sechskant-Mutter geben. Die eine Spiegelebene bestimmt die strichpunktiert angedeutete Spiegelachse 74, die sich im angrenzenden Plattenabschnitt 67 fortsetzt, auch wenn dieser in dazu rechtwinkliger Weise spiegelsymmetrisch ausgebildet ist. Dieser benachbarte Plattenabschnitt 67 dient als Handhabe und ragt, nach ihrer Montage, hereichsweise aus dem Plattengehäuse 10' heraus.

Die Montage des Schiebers 20' im Plattengehäuse 10' erfolgt über die Höhlenöffnung. Die vorbeschriebene Rinne 57 dient zur Aufnahme des Arbeitsabschnitts 68, weshalb die Höhlenwände 60 sowohl bei der Montage als auch danach die maßgebliche Führungsbahn erzeugen. An dieser Bahn werden die beiden einander diametral gegenüberliegenden Zwischenzonen 75 gleitgeführt, welche zwischen den vorbeschriebenen beidseitigen Auflaufschrägen 72, 73 sich befinden. Bei der Montage werden aber auch die beiden vorbeschriebenen Nocken 61 wirksam. Der zwischen ihnen liegende Abstand 62 ist gegenüber dem durch die beiden Zwischenzonen 75 bestimmten Außenmaß 76 des Plattenabschnitts 68 um ca. 1/10 mm enger ausgebildet. Bei der Montage laufen daher die beiden einander gegenüberliegenden Nocken 61 auf die beiden inneren Auflaufschrägen 72 auf und führen zu einer elastischen Verformung, bis die Nocken 61, jenseits der beiden Zwischenzonen 75, hinter den äußeren Auflaufschrägen 73 wieder zurück schnappen. Danach ist der Schieber 20' durch seinen eingeführten hinter den Nocken 61 liegenden Plattenabschnitt 68 ausreichend gesichert. Die im Höhlengrund in der Kammer 36 befindliche Druckfeder, wie sie im ersten Ausführungsbeispiel erläutert wurde, hat keine genügende Kraft, um, nach dieser Montage, den Schieber 20' wieder vom Gehäuse 10' zu trennen. Eine Demontage wäre an sich wegen der gegensinnig geneigten äußeren Auflaufschrägen 73 auf der gegenüberliegenden Seite möglich. Sofern dies nicht erwünscht ist, könnten hier entsprechende Hinterschnitte verwendet werden. Auch geeignete ungleichförmige Profilierungen der Nocken 61 könnten eine Demontage erschweren oder gar unmöglich machen, falls dies erwünscht sein sollte. Im endgültigen Gebrauchszustand jedenfalls ist die unerwünschte Demontage ohnehin nicht zu befürchten, weil durch die durchgefädelte Kordel, wie aus Fig. 5 des vorausgehenden Ausführungsbeispiels ersichtlich, die beiden Bestandteile 10', 20' miteinander verbindet.

Im Montagefall befindet sich der als Handhabe fungierende Plattenabschnitt 67 im Bereich der beschriebenen Rinnen-Ausweitungen 59 und wird dort geführt. Die Eindrücktiefe des Schiebers 20' wird an der Abschnitts-Schmalseite 71 durch die überstehenden Kanten zwischen den beiden Plattenabschnitten 67, 68 bestimmt, die auf den Boden der Ausweitung 59 stoßen. Die vorbeschriebenen Schrägflächen 58 im Höhlengrund gestatten ein ungestörtes Eindrücken des montierten Schiebers 20' und können mit den inneren Auflaufschrägen 72 seines Plattenabschnitts 68 zusammenwirken.

Bezugszeichenliste:

| | | |
|---|---|---|
| | 10 | Gehäuse (Fig. 1 bis 5) |
| | 10' | Plattengehäuse (Fig. 6, 7) |
| | 11 | Plattenebene |
| | 12 | Kreisumriß |
| | 13 | Kanal |
| | 14 | Gehäusehälfte |
| | 15 | Längsschale von 13 |
| | 16 | Austrittsöffnung |
| | 17 | Plattenschmalseite |
| | 18 | Plattenbreitfläche |
| | 19 | Ziernut bei 18 |
| | 20 | Schieber (Fig. 1 bis 5) |
| | 20' | Schieber (Fig. 8, 9) |
| | 21 | Arbeitsabschnitt von 20 |
| | 22 | Handhabe von 20 |
| | 23 | Längserstreckung von 21 |
| | 24 | Längserstreckung von 22 |
| | 25 | Verbindungsstück zwischen 21, 22 |
| | 26 | Innenende von 20 |
| | 27 | Außenende von 20 |
| | 28 | Ausschubbewegungs-Pfeil |
| | 28' | Einschubbewegungs-Pfeil |
| | 29 | Anschlagschulter |
| | 30 | Kordel |
| | 31 | Führungsbahn für 20 |
| | 32 | Druckfeder |
| | 33 | Durchtrittsloch in 21 |
| | 34 | lichte Weite von 33 |
| | 35 | angeformter Zapfen an 26 |

36 Kammer für 32
37 Längsverschiebungs-Pfeil von 30
38 Kordellängen-Stück
39 Kordelquetschung bei 33
40 Verbindungselement, Zapfen
41 Verbindungselement, Zapfen
42 Verbindungselement, Aufnahme
43 Verbindungselement, Aufnahme
44 Trennfuge zwischen 14
45 Berührungsfläche von 14
46 Aussparung für 41
47 Aufnahme-Hülse bei 43
48 Ausnehmung für 47
49 Schweißrippe
50 Schweißrippe
51 Werkstoffbrücke
52 radial weiteste Gehäusestelle

**Patentansprüche**

1. Kordelstopper mit wenigstens einer durchziehbaren Kordel (30) sowie mit einer Arretierung zum Festsetzen der Kordel (30) an einer wählbaren Kordelstelle (38),

   bestehend aus einem plattenförmigen Gehäuse (10) mit wenigstens einem die Kordel (30) aufnehmenden, durchgehenden Kanal (13), und aus einem im Gehäuse (10) längsgeführten Schieber (20), der zur Arretierung der Kordel (30) quer zum Kanal (13) bewegbar (28) ist,

   **dadurch gekennzeichnet,**

   daß der Kanal (13) parallel zur Plattenebene (11) des Gehäuses (10) verläuft,

   die Kanal-Austrittsöffnungen (16) an den Schmalseiten (17) des Gehäuses (10) angeordnet sind

   und wenigstens die eine Plattenbreitfläche (18) des Gehäuses längsseits der Kordel (30) frei liegt und Träger von Bild-, Schrift- und/oder Zierelementen ist.

2. Kordelstopper nach Anspruch 1, dadurch gekennzeichnet, daß bei einem plattenförmigen Gehäuse (10) mit Kreisumriß (12) der Kanal (13) den Kreis diametral durchsetzt.

3. Kordelstopper nach Anspruch 1 oder 2, dadurch gekennzeichnet, daß die Plattenbreitfläche (18) des Gehäuses (10) formgleich mit der Kappe von Befestigungsteilen eines Hartkurzwaren-Artikels gestaltet ist, wie eine Kappe von Nieten, Druckknopfteilen, Bördelringen od. dgl., und Träger von Kappen-Firmenlogos ist.

4. Kordelstopper nach einem oder mehreren der Ansprüche 1 bis 3, dadurch gekennzeichnet, daß das plattenförmige Gehäuse (10) aus zwei Gehäusehälften (14) besteht, deren Trennfuge (44) die Austrittsöffnungen (16) des Kanals (13) schneidet.

5. Kordelstopper nach einem oder mehreren der Ansprüche 1 bis 4, dadurch gekennzeichnet, daß das Gehäuse (10') bzw. seine Gehäusehälften (14) zueinander spiegelbildlich gleich gestaltete Plattenbreitflächen (18) aufweisen.

6. Kordelstopper nach Anspruch 4 oder 5, dadurch gekennzeichnet, daß beide Gehäusehälften (14) zueinander formgleich gestaltet sind und gleichzeitig beide zueinander komplementäre Verbindungselemente, wie Zapfen (40, 41) und Aufnahmen (42, 43), in zueinander spiegelbildlicher Anordnung tragen.

7. Kordelstopper nach einem oder mehreren der Ansprüche 1 bis 6, dadurch gekennzeichnet, daß die Schieber-Handhabe (22) an jener Stelle (52) des Gehäuses (10) austritt, die zur Kordel-Achse (53) den größten Radialabstand (54) aufweist.

8. Kordelstopper nach einem oder mehreren der Ansprüche 4 bis 7, dadurch gekennzeichnet, daß der Kanal (13) für die Kordel (30) in zwei Längsschalen (15) geteilt ist und je eine der beiden Kanalschalen (15) in einer Gehäusehälfte (14) integriert ist.

9. Kordelstopper nach einem oder mehreren der Ansprüche 4 bis 8, dadurch gekennzeichnet, daß die Gehäusehälften (14) an ihrer die Trennfuge (44) bestimmenden Berührungsfläche (45) Dichtungsrippen (49, 50) tragen, die vorzugsweise in der Randzone angeordnet sind.

10. Kordelstopper nach einem oder mehreren der Ansprüche 4 bis 9, dadurch gekennzeichnet, daß die beiden Gehäusehälften (14) durch eine klappbewegliche Brücke (51), wie ein Filmscharnier, miteinander verbunden sind.

11. Kordelstopper nach einem oder mehreren der Ansprüche 1 bis 10, dadurch gekennzeichnet, daß der Schieber (20) mit seiner aus dem Gehäuse (10) herausragenden, ein Rechteckprofil (24) aufweisenden Handhabe (22) sich in der Axialebene (11) der Kordel (30) erstreckt.

12. Kordelstopper nach einem oder mehreren der Ansprüche 1 bis 11, dadurch gekennzeichnet, daß der Schieber (20) in seinem im Gehäuseinneren längsgeführten Arbeitsabschnitt (21) ein von der Kordel (30) durchsetztes Durchtrittsloch (33) aufweist,

das in voller Einschublage (28') des Schiebers (20) zwar mit dem Kanal (13) fluchtet, aber durch Federkraft (28) bestrebt ist, in seitlichen Versatz zum Kanal (13) überzugehen.

13. Kordelstopper nach Anspruch 12, dadurch gekennzeichnet, daß die Öffnungsebene des Durchtrittslochs (33) im Schieber-Arbeitsabschnitt (21) rechtwinklig zum Rechteckprofil (24) der am äußeren Schieberende (27) befindlichen Handhabe (22) verläuft.

14. Kordelstopper nach Anspruch 12 oder 13, dadurch gekennzeichnet, daß in einer Innenkammer (36) der Gehäuse (10) eine Druckfeder (32) angeordnet ist, die am inneren Schieberende (26) angreift.

15. Kordelstopper nach einem oder mehreren der Ansprüche 1 bis 14, dadurch gekennzeichnet, daß das Plattengehäuse (10') einstückig ausgebildet ist und im Gehäuseinneren zwei, einander kreuzende Kammern (57; 13) beinhaltet,

nämlich einen in der Plattenebene (11) durchlaufenden Kanal (13) für die Kordel (30) und eine als Führungsbahn (57) für den Schieber (20') fungierende Höhle (55), deren Höhlenöffnung an einer Schmalseite (57) des Plattengehäuses (10') liegt, (vergl. Fig. 6, 7).

16. Kordelstopper nach Anspruch 15, dadurch gekennzeichnet, daß das Plattengehäuse (10') als ein vorzugsweise als Kunststoffkörper ausgebildeter Spritzgußteil gestaltet ist.

17. Kordelstopper nach einem oder mehreren der Ansprüche 1 bis 16, dadurch gekennzeichnet, daß wenigstens die eine Plattenbreitfläche des Plattengehäuses (10') als Kugelfläche (63) gestaltet ist, deren Kugelradius (64) die gegebenen Dimensionen des Plattengehäuses (10') übersteigt.

18. Kordelstopper nach Anspruch 17, dadurch gekennzeichnet, daß die Wölbung der Kugelfläche (63) gleich der konkaven Krümmung der Kappen von Befestigungsteilen eines Hartkurzwaren-Artikels gestaltet ist.

19. Kordelstopper nach Anspruch 17 oder 18, dadurch gekennzeichnet, daß die Kugelfläche (63) des Plattengehäuses von im wesentlichen ebenen, ggf. mit Kantenrundungen (65) versehenen Rahmenteilen (66) eingefaßt ist, welche die Plattenbreitflächen mitbestimmen.

20. Kordelstopper nach Anspruch 19, dadurch gegekennzeichnet, daß die Kugelfläche (63) gegenüber ihren Rahmenteilen (66) von einer umlaufenden Nut (19) begrenzt ist.

21. Kordelstopper nach einem oder mehreren der Ansprüche 1 bis 20, dadurch gekennzeichnet, daß der Schieber (20') seinerseits einstückig aus zwei Plattenabschnitten (67; 68) mit ebenen Plattenflächen (69, 70) besteht, die in zueinander rechtwinkligen Ebenen verlaufen und an einer ihrer Plattenschmalseiten (71) miteinander fest verbunden sind,

wobei der eine Plattenabschnitt (67) die Handhabe und der andere Plattenabschnitt (68) den Arbeitsabschnitt des Schiebers (20') bildet, welcher mit dem Kordel-Durchtrittsloch (33) ausgerüstet ist, (vergl. Fig. 8, 9).

22. Kordelstopper nach Anspruch 21, dadurch gekennzeichnet, daß die beiden zueinander senkrecht verlaufenden Plattenabschnitte (67, 68) in sich spiegelsymmetrisch gestaltet sind und die Symmetrieachsen (74) an der schmalseitigen gemeinsamen Verbindungsstelle (71) ineinander übergehen.

23. Kordelstopper nach Anspruch 21 oder 22, dadurch gekennzeichnet, daß die als Führungsbahn fungierende Höhle (55) entsprechend den Dimensionen der beiden Plattenabschnitte abgesetzt (57, 58, 59) ist

und die Höhlenwände (60) Nocken (61) besitzen, die gegenüber dem Außenmaß (76) des Schiebers (20') die lichte Weite der Höhle (55) verengen.

24. Kordelstopper nach Anspruch 23, dadurch gekennzeichnet, daß an den Höhlenwänden (60) im Bereich der Handhabe ein Paar von Führungsnocken einander gegenüberliegen, deren Abstand (62) kleiner als das Außenmaß (76) von zwei Gleitflächen (75) am arbeitswirksamen Plattenabschnitt (68) ausgebildet ist.

25. Kordelstopper nach Anspruch 23 oder 24, dadurch gekennzeichnet, daß der arbeitswirksame Plattenabschnitt an seinen Gleitflächen (75) mit inneren (72) und ggf. äußeren Auflaufschrägen (73) versehen ist, welche unter elastischer Verformung des Nockenabstands (62) eine Schnapp-Montage der beiden Bestandteile (10', 20') ermöglichen.

26. Kordelstopper nach einem oder mehreren der Ansprüche 1 bis 25, dadurch gekennzeichnet, daß das Durchtrittsloch (33) einen in Wirkungsrichtung der Federbelastung (32) weisenden Zahn (77) aufweist, der im Ruhefall ins Innere der Kordel (30) eingedrückt ist.

FIG.1

FIG.2b

FIG.2a

FIG.4

FIG. 3

FIG. 5

FIG. 6

FIG. 7

## FIG. 8

## FIG. 9